**Europäisches Patentamt**

(19) **European Patent Office**

**Office européen des brevets**

(11) Numéro de publication: **0 021 885**
**B1**

(12) **FASCICULE DE BREVET EUROPEEN**

(45) Date de publication du fascicule du brevet:
07.09.83

(51) Int. Cl.³: **F 16 K 1/22, F 16 K 35/10,**
**F 16 K 31/44, G 05 G 5/18**

(21) Numéro de dépôt: **80400742.5**

(22) Date de dépôt: **28.05.80**

(54) **Manette de commande pour vanne.**

(30) Priorité: **07.06.79 FR 7914597**

(43) Date de publication de la demande:
**07.01.81 Bulletin 81/1**

(45) Mention de la délivrance du brevet:
**07.09.83 Bulletin 83/36**

(84) Etats contractants désignés:
**AT BE CH DE GB IT LI LU NL SE**

(56) Documents cités:
**FR-A-459 314**
**FR-A-2 320 481**
**FR-A-2 365 939**
**US-A-2 499 739**
**US-A-2 939 674**
**US-A-3 329 394**
**US-A-3 349 639**
**US-A-3 921 955**

(73) Titulaire: **Gachot, Jean, 26 bis, avenue de Paris,**
**F-95230 Soisy sous Montmorency (FR)**

(72) Inventeur: **Gachot, Jean, 26 bis, avenue de Paris,**
**F-95230 Soisy sous Montmorency (FR)**

(74) Mandataire: **Bouju, André, 38 Avenue de la Grande**
**Armée, F-75017 Paris (FR)**

Manette de commande pour vanne

La présente invention concerne un dispositif de commande verrouillable pour vanne et analogue, comprenant une manette à laquelle est fixé un téton de calage destiné à être engagé de manière amovible dans des crans échelonnés du corps de la vanne, des moyens pour solidariser la manette en rotation avec l'arbre de commande de la vanne, et des moyens d'articulation pour faire osciller la manette autour d'un axe d'articulation transversal à l'arbre de commande entre une position verrouillée dans laquelle le téton est engagé dans l'un des crans, et une position libre dans laquelle le téton est dégagé des crans, la manette comprenant une tête portant le téton et recevant l'axe d'articulation et une poignée rattachée à la tête.

Un tel dispositif, connu du US-A-3 329 394, est simple à manoeuvrer puisqu'il suffit d'agir sur la poignée pour dégager le téton des crans, faire pivoter l'arbre de commande de vanne ou analogue et réengager le téton dans les crans.

Cependant, il est encombrant puisque la manette doit avoir une longueur suffisante pour que l'on puisse effectuer sans effort excessif tant soit le dégagement du téton que le pivotement de l'arbre de commande.

Le but de l'invention est de proposer un dispositif de commande verrouillable qui remédie à l'encombrement du dispositif connu sans en compliquer notablement le maniement.

Suivant l'invention, le dispositif de commande est caractérisé en ce que la poignée est mobile par articulation à la tête selon un axe parallèle à l'axe d'articulation, entre une position de service dans laquelle elle prolonge la tête et une position de repos dans laquelle elle est repliée sur la tête, et en ce que la rotation qui fait passer la poignée de sa position de service à sa position de repos s'effectue dans le même sens que celle qui fait passer la manette de sa position libre vers sa position verrouillée.

La poignée peut ainsi être repliée au-dessus de la tête pour rendre la manette moins encombrante et/ou moins exposée à être déverrouillée accidentellement. Quand on veut effectuer un réglage, la manoeuvre demeure très aisée malgré la poignée repliable car le déverrouillage s'effectue tout simplement en prolongeant le mouvement de déploiement de la poignée. De même le repliage de la poignée prolonge tout naturellement le verrouillage en fin de manoeuvre.

D'autres particularités et avantages de la présente invention ressortiront encore de la description ci-après.

Aux dessins annexés, donnés à titre d'exemples non limitatifs:

— la fig. 1 est une vue en perspective d'une vanne-papillon, en position de semi-ouverture, munie d'une manette conforme à l'invention,

— la fig. 2 est une vue en élévation latérale de la manette de la fig. 1 en position verrouillée, avec arrachement de la vanne,

— la fig. 3 est une vue de dessus de la manette de la fig. 2,

— la fig. 4 est une vue en élévation latérale et en coupe de la manette de la fig. 2, et

— la fig. 5 est une vue analogue à la fig. 4 de la manette en position libre.

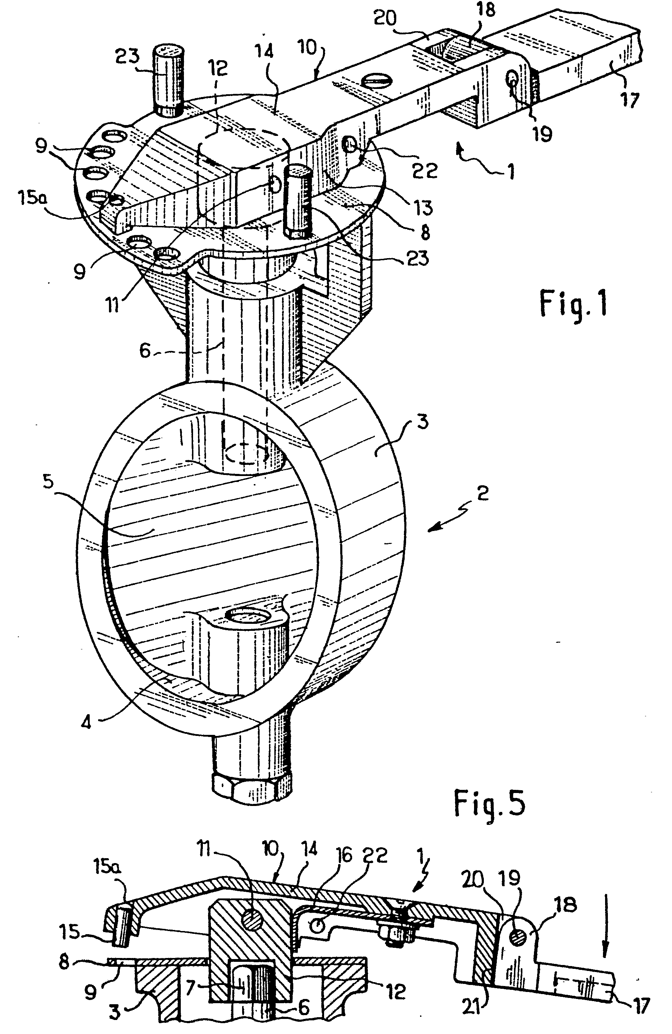

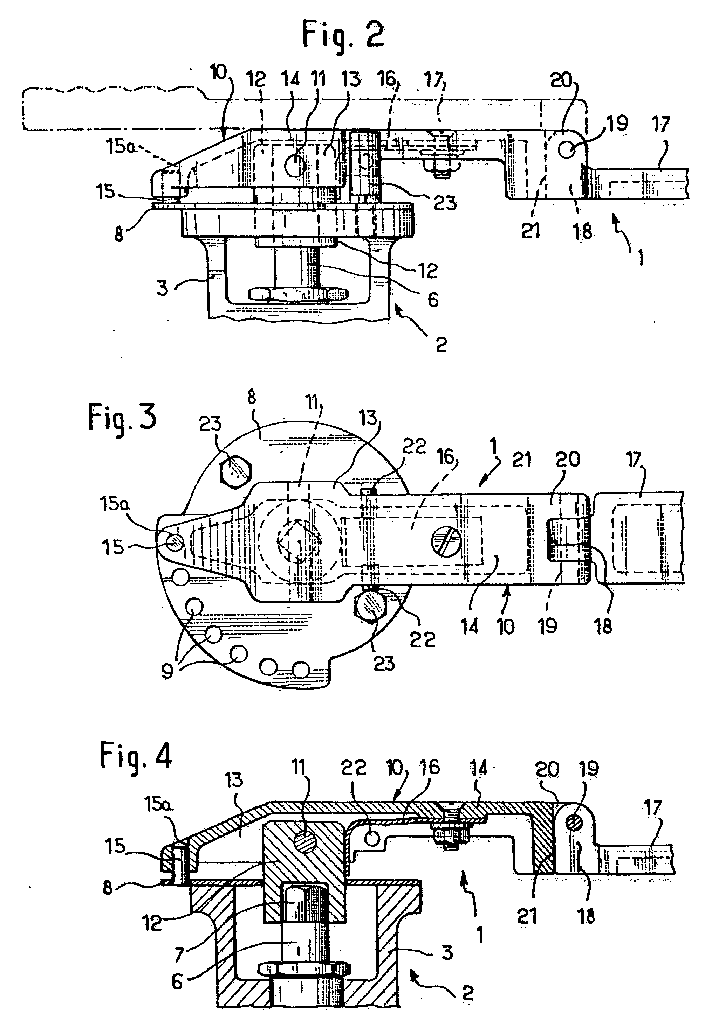

Dans l'exemple de réalisation des fig. 1 à 5, on a montré l'adaptation de la manette 1 à une vanne-papillon 2. Cette vanne comporte un corps 3 traversé par un conduit 4 dans lequel un disque obturateur mobile 5 est rendu solidaire en rotation d'un arbre de commande 6 monté à pivotement dans le corps 3. L'arbre 6 est terminé, à l'extérieur du corps 3, par un carré 7 (fig. 4, 5), entouré par une plaque porte-accessoires 8 solidaire du corps 3. Dans la plaque 8 sont ménagés une série d'orifices circulaires ou crans 9, échelonnés selon un quart de cercle entré sur l'axe de l'arbre 6.

Conformément à l'invention, la manette 1 comprend une tête allongée 10 articulée, par un axe 11 transversal à l'arbre 6 et à la tête 10, à un capuchon 12 rendu solidaire en rotation de l'arbre 6 par emboîtement sur le carré 7 (fig. 4). L'axe 11 traverse le capuchon 12 au delà de l'extrémité de l'arbre 6, et les extrémités de cet axe 11 sont engagées dans une chape formée üar des ailes parallèles 13 de la tête 10 reliées par une aile centrale 14.

L'une des extrémités de la tête 10 porte un téton 15 ommanché à force dans un orifice 15a de cette dernière et destiné à s'engager de façon amovible dans l'un quelconque des crans 9.

La manette 1 peut occuper une position verrouillée (fig. 1, 3 et 4), dans laquelle le téton 15 est effectivement engagé dans un cran 9, et, par basculement autour de l'axe 11, passer à une position libre (fig. 5) dans laquelle le téton 15 est dégagé des crans 9.

Contre la face interne de l'aile 14 est fixée une lame de ressort 16 sensiblement recourbée à 90° de sorte que l'une de ses extrémités s'appuie élastiquement contre la paroi latérale du capuchon 12 opposée au téton 15. Le ressort 16 tend ainsi en permanence à ramener la manette 1 en position verrouillée.

Selon une particularité de l'invention, la manette 1 comprend une poignée 17 dont une oreille terminale 18 est articulée, selon un axe 19 parallèle à l'axe 11, à une chape 20 ménagée à l'extrémité de la tête 10 opposée au téton 15.

L'oreille 18 fait saillie transversalement à la poignée 17 dans la direction de verrouillage de la manette 1, de sorte que l'axe 19 est décalé dans cette direction par rapport à la poignée 17.

Ainsi, la poignée 17 est mobile autour de l'axe 19 entre une position de service dans laquelle elle prolonge la tête 10 avec un décalage par rapport à cette dernière, l'orcille 18, entièrement engagée dans la chape 20, s'appuyant sur le fond 21 de cette dernière, et une position de repos dans laquelle elle est repliée sensiblement à 180°, et repose au-dessus de la tête 10, comme représenté en traits mixtes à la fig. 2.

La rotation faisant passer la poignée 17 de sa position de service vers sa position de repos s'effectue dans le même sens que celle faisant passer la manette 1 de sa position libre vers sa position verrouillée.

La manette 1 porte deux butoirs 22 vissés chacun dans une aile 13 respective, et réglables par vissage dans la direction tangentielle à la rotation de la manette 1, tandis que la plaque 8 est munie de deux arrêts 23 solidaires du corps 3 et situés de part et d'autre de la manette 1, chacun sur la trajectoire d'un butoir 22 respectif. Quand l'un des butoirs 22 est en appui sur l'arrêt 23 correspondant, le téton 15 est en regard de l'un des deux crans 9 extrrêmes (fig. 3) correspondant respectivement aux positions d'ouverture et de fermeture de l'obturateur.

La mise en oeuvre de la manette 1 pour la commande de l'obturateur 5 de la vanne 2 est la suivante:

Entre deux réglages du débit, le ressort 16 assure le maintien de la manette 1 en position verrouillée, tandis qu'en vue d'un encombrement réduit, la poignée 17 a été amenée en position de repos.

Pour procéder à un réglage de débit, on ramène la poignée en position de service, et on poursuit le mouvement de la poignée 17 dans cette direction, ce qui, grâce à l'appui de l'oreille 18 sur le fond 21, fait basculer la manette 1 en position libre, avec tension du ressort 16.

On fait alors tourner la manette 1 avec l'axe 6 jusqu'à ce que le téton 15 soit en face du nouveau cran 9 choisi. On lâche alors la manette 1 qui, sous l'effet du ressort 16, revient en position verrouillée avec engagement du téton 15 dans ce cran. On peut ensuite ramener la poignée 17 en position de repos.

La manette conforme à l'invention est ainsi particulièrement facile d'emploi, tout en étant simple à fabriquer et peu encombrante une fois installée sur la vanne. En outre, grâce en particulier à l'absence de mécanisme de retrait du téton dans la manette, il a été possible de prévoir une poignée repliable qui permet de réduire encore cet encombrement.

Bien entendu, l'invention n'est pas limitée à l'exemple décrit, et de nombreux aménagements peuvent lui être apportés, sans sortir de son cadre.

C'est ainsi qu'on peut prévoir que l'axe d'oscillation de la manette est engagé dans un orifice transversal de l'arbre de commande de la vanne, et de ce fait, assure en même temps le blocage en rotation de la manette sur l'arbre de commande.

De même, les crans de retenue pourraient être constitués par des encoches pratiquées à la périphérie de la plaque 8.

## Revendications

1. Dispositif de commande verrouillable pour vanne et analogue, comprenant une manette (1) à laquelle est fixé un téton de calage (15) destiné à être engagé de manière amovible dans des crans échelonnés (9) du corps (3) de la vanne (2), des moyens (12) pour solidariser la manette (1) en rotation avec l'arbre de commande (6) de la vanne (2), et des moyens d'articulation pour faire osciller la manette (1) autour d'un axe d'articulation (11) transversal à l'arbre de commande (6) entre une position verrouillée dans laquelle le téton (15) est engagé dans l'un des crans (9), et une position libre dans laquelle le téton (15) est dégagé des crans (9), la manette (1) comprenant une tête (10) portant le téton (15) et recevant l'axe d'articulation (11), et une poignée (17) rattachée à la tête, caractérisé en ce que la poignée (17) est mobile par articulation à la tête (10) selon un axe (19) parallèle à l'axe d'articulation (11), entre une position de service dans laquelle elle prolonge le tête (10) et une position de repos dans laquelle elle est repliée sur la tête (10), et en ce que la rotation qui fait passer la poignée (17) de sa position de service à sa position de repos s'effectue dans le même sens que elle qui fait passer la manette (1) de sa position libre vers sa position verrouillée.

2. Dispositif conforme à la revendication 1, caractérisé en ce que la tête (10) de la manette (1) est prolongée au-delà de l'arbre de commande (6) en direction opposée à la poignée (17) et porte le téton de calage (15) à son extrémité opposée à la poignée (17).

## Patentansprüche

1. Verriegelbare Steuervorrichtung für einen Schieber und dergleichen, mit einem Betätigungshebel (1), an dem ein Feststellzapfen (15) befestigt ist, der dazu bestimmt ist, entfernbar in gestaffelte Ausnehmungen (9) des Körpers (3) des Schiebers (2) einzugreifen, Mitteln (12) zur drehfesten Verbindung des Betätigungshebels (1) mit der Steuerwelle (6) des Schiebers (2) und Gelenkmitteln, um den Betätigungshebel (1) um eine Gelenkachse (11), die transversal zur Steuerwelle (6) ist, verschwenkbar zu machen zwischen einer verriegelten Stellung, in welcher der Zapfen (15) in eine der Ausnehmungen (9) eingreift, und einer freien Stellung, in welcher der Zapfen (15) von den Ausnehmungen (9) befreit ist, wobei der Betätigungshebel (1) ein den Zapfen (15) tragendes und die Gelenkachse (11) aufnehmendes Kopfstück und einen an dem Kopfstück befestigten Handgriff (17) aufweist, dadurch gekennzeichnet, daß der Handgriff (17) durch Anlenkung an dem Kopfstück (10) um eine Achse (19), die parallel zur Gelenkachse (11) ist, zwischen einer Betriebsstellung, in welcher er das Kopfstück (10) verlängert, und einer Ruhestellung, in welcher er auf das Kopfstück (10) zurückgeklappt ist, bewegbar ist, und daß die Drehung, durch welche der Handgriff (17) aus seiner Betriebsstellung in seine Ruhestellung gelangt, in demselben Sinn erfolgt wie diejenige, durch welche der Betätigungshebel (1) aus seiner freien Stellung in seine verriegelte Stellung gelangt.

2. Vorrichtung nach Anspruch 1, dadurch gekennzeichnet, daß das Kopfstück (10) des Betätigungshebels (1) über die Steuerwelle (6) hinaus in Richtung von dem Handgriff (17) fort verlängert ist und den Feststellzapfen (15) an seinem von dem Handgriff (17) abgewandten Ende trägt.

## Claims

1. Lockable control device for a valve and the like, comprising a handle (1) fixedly carrying a locking pin (15) intended to be removably engaged in spaced-out notches (9) of the body (3) of the valve (2), means (12) for rendering the handle (1) rotatably integral with the control shaft (6) of the valve (2), and pivoting means enabling the handle (1) to be rocked about a fulcrum pin (11) transverse to the control shaft (6) between a locked position in which the pin (15) is engaged in one of the notches (9) and a free position in which the pin (15) is disengaged from the notches (9), the handle (1) comprising a head (10) bearing the pin (15) and receiving the fulcrum pin (11) and a haft (17) secured to the head, characterized in that the haft (17) is pivotable with respect to the head (10) about an axis (19) parallel to the fulcrum pin (11), said haft being movable between a service position whereby it extends the head (10) and a rest position whereby it is folded onto the head (10), and in that the rotation which takes the haft (17) from its service position to its rest position is performed in the same direction as that which takes the handle from its free position to its locked position.

2. Device as claimed in claim 1, characterized in that the head (10) of the handle (1) is extended beyond the control shaft (6) in the opposite direction to the haft (17) and carries the locking pin (15) at its end directed away from the haft (17).

Fig.1

Fig.5

## Fig. 2

## Fig. 3

## Fig. 4